# EUROPEAN PATENT SPECIFICATION

(11) **EP 4 716 297 B1**
(45) Date of publication and mention of the grant of the patent: **28.10.2026**
(21) Application number: 24201226.8
(22) Date of filing: 18.09.2024
(51) Int. Cl.: H04W 36/00

(54) **METHOD FOR PERFORMING A HANDOVER OPERATION OF A USER EQUIPMENT IN A MOBILE COMMUNICATION NETWORK**
VERFAHREN ZUR DURCHFÜHRUNG EINES HANDOVER-BETRIEBS EINES BENUTZERGERÄTS IN EINEM MOBILKOMMUNIKATIONSNETZ
PROCÉDÉ POUR EFFECTUER UNE OPÉRATION DE TRANSFERT D'UN ÉQUIPEMENT UTILISATEUR DANS UN RÉSEAU DE COMMUNICATION MOBILE

(43) Date of publication of application: 25.03.2026
(73) Proprietor: Deutsche Telekom AG, 53113 Bonn (DE)
(72) Inventor: KLATT, Axel, 50999 Köln (DE)
(74) Representative: Schwöbel, Thilo K.

(56) References cited:
- GB-A- 2 611 303
- US-A1- 2013 231 116
- US-A1- 2023 292 183
- SAMSUNG ET AL: "UE History Information for CHO and MR-DC", vol. RAN WG3, no. 20220815 - 20220824, 9 August 2022 (2022-08-09), XP052264983, Retrieved from the Internet <URL:https://ftp.3gpp.org/tsg_ran/WG3_Iu/TSGR3_117-e/Docs/R3-224816.zip R3-224816 UHI.docx> [retrieved on 20220809]

## Description

### BACKGROUND

The present invention relates a method for performing a handover operation of a user equipment in a mobile communication network, wherein the mobile communication network comprises a radio access network comprising a plurality of base station entities, wherein, prior to the handover operation, the user equipment is served by a source base station entity, and, subsequent to the handover operation, the user equipment is served by a target base station entity.

Furthermore, the present invention relates to a user equipment for being used with a mobile communication network for performing a handover operation of the user equipment in the mobile communication network, wherein the user equipment communicates with the mobile communication network using a radio access network of the mobile communication network that comprises a plurality of base station entities, wherein, prior to the handover operation, the user equipment uses, or is served by, a source base station entity, and, subsequent to the handover operation, the user equipment uses, or is served by, a target base station entity.

Additionally, the present invention relates to a system or mobile communication network for performing a handover operation of a user equipment in a mobile communication network, wherein the mobile communication network comprises a radio access network comprising a plurality of base station entities, wherein, prior to the handover operation, the user equipment is served by a source base station entity, and, subsequent to the handover operation, the user equipment is served by a target base station entity.

Furthermore, the present invention relates to a program comprising a computer readable program code, which, when executed on a computer and/or on a user equipment and/or on a network node of a mobile communication network, especially a base station entity, or in part on a user equipment and/or in part on the network node of the mobile communication network, especially a base station entity, causes the computer and/or the user equipment and/or the network node of the mobile communication network, especially the base station entity, to perform a method according to the inventive method.

Still furthermore, the present invention relates to a computer-readable medium comprising instructions which when executed on a computer and/or on a user equipment and/or on a network node of a mobile communication network, especially a base station entity, or in part on a user equipment and/or in part on the network node of the mobile communication network, especially a base station entity, causes the computer and/or the user equipment and/or the network node of the mobile communication network, especially the base station entity, to perform a method according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G radio access technologies (referring to the different generations of radio access technologies) and typically comprise (or consist of) cells (or radio cells) of one or a plurality of the respective radio access technology/radio access technologies. Such mobile communication networks - that are purely or predominantly based on terrestrial infrastructures of the radio access network - are typically organized throughout a country (or throughout a part thereof or throughout a region within a country) in a repeating pattern of typically stationary (radio) cells (and associated base station entities) which typically belong to (or are used by or associated or assigned to) a mobile network operator (MNO).

Conventionally, in order to provide the radio network infrastructure and especially the limited frequency and time resources as well as - in case of recent MU-MIMO techniques - spatial resources, of a mobile communication network in an adaptive and efficient manner, a variety of schemes of radio resource management (RRM) are known and applied. RRM methods are typically aimed towards maximizing the system spectral efficiency while providing a satisfying user experience. In contrast to static methods of RRM, which rely on a cell planning and are unable to adapt to changing conditions, multiple dynamic schemes of RRM have been suggested and are currently in operation which are, in principle, able to deal with fluctuating usage patterns and network load. However, known dynamic methods of bandwidth or channel allocation or channel-dependent scheduling require a considerable effort to be employed and operated in a mobile communication network.

Document US 2013/231116 A1 described a method and system for processing mobile station transaction history in a wireless communication network, particularly for improving handover and resource allocation decisions, while Document GB 2611303 A described a system and method for collecting and reporting user equipment trajectory data in mobile telecommunication networks to support mobility prediction, optimization, and machine learning-based decision-making. However, neither of these documents address or solve the problem of enhancing handover efficiency and radio resource management by considering slice-specific data usage and buffer status information.

### SUMMARY

An object of the present invention is to provide a technically simple, effective and cost-effective solution such that network resources of a mobile communication network are efficiently provided to a user equipment depending on the particular history of the user equipment within the mobile communication network.

Hereinafter, the term base station entity ought to be understood as referring to a base station or a base station functionality of any mobile network generation. More specifically, and for example, in case of the fourth generation mobile network (4G) the term base station entity ought to be understood as a eNB or a corresponding functionality, while in case of the fifth generation mobile network (5G) the term base station entity ought to be understood as a gNB or a corresponding functionality and in case of the sixth generation mobile network (6G) the term base station entity ought to be understood as the corresponding base station or its corresponding functionality of the sixth generation (6G) of mobile networks.

The object of the present invention is achieved by a method for performing a handover operation of a user equipment in a mobile communication network, wherein the mobile communication network comprises a radio access network comprising a plurality of base station entities, wherein, prior to the handover operation, the user equipment is served by a source base station entity, and, subsequent to the handover operation, the user equipment is served by a target base station entity, characterized in that, the method comprises the following steps:
-- in a first step, the source base station entity transmits a handover request message to the target base station entity, and
-- in a second step, the target base station entity transmits a handover request acknowledge message,

wherein a history information element relating to the user equipment
   -- is either transmitted as part of the handover request message,
   -- or is transmitted, to the target base station entity, by the user equipment,
wherein the history information element comprises a last data usage information comprising pieces of data usage information regarding base station entities previously used by the user equipment, wherein the last data usage information comprises a last activated slice information and a last buffer status per activated slice information.

It is thereby advantageously possible according to the present invention to realize a radio resource management (RRM) scheme by informing the target base station entity about the last data usage information of the user equipment, such as, especially temporal usage patterns and/or a time series of data traffic values and/or a time series of values of a data transmission rate and/or a time series of values of transmitted data volume, any of these quantities or series of quantities having been generated in downlink and/or uplink. It is furthermore possible to inform the target base station entity about a set of data traffic values and/or a set of values of a data transmission rate and/or a set of values of transmitted data volume, any of these quantities or sets of quantities having been generated in downlink and/or uplink. Moreover, by using the largely standardized process of handover between source base station entity and target base station entity the last data usage information comprising pieces of data usage information can be transmitted effectively and with less technical effort. As a result, it is advantageously possible that the mobile communication network, or any of its components, infers or predicts future usage or usage patterns of its resources, especially frequency, temporal, spatial or infrastructural resources, or the probability or likelihood that a certain past usage or usage pattern of its resources is going to be continued in the future or the probability or likelihood that a particular service is requested in the future, wherein the inferences or predictions are especially and preferably generated by an artificial intelligence model or machine learning model, favorably a neural network model. Any of these inferences or predictions possibly being based on last data usage information that relates to a single user equipment or a set of last data usage information that relates to multiple user equipments. Therefore, and for example, the RRM in the target base station entity (i.e. in the target cell) or the RRM in the mobile communication network (when utilizing the history information element received by the target base station entity) can use this additional historic usage information to enhance RRM methods like selection of optimal frequency configuration, pre-active resource allocation (especially if uplink is the main used direction) and Carrier Aggregation (CA) configuration in advance as the likely continuation of services and the related traffic flow or data volume can be more precisely predicted with the availability of this additional information. Overall, the system and service performance of a mobile communication network can be enhanced over what is possible with state of the art technologies where such historic usage information is not available in the target node. Also preferably, the history information element, especially the last data usage information, is not transferred between the source and the target base station entities by direct signaling but conveyed to the target base station entity in a user equipment based signaling procedure, wherein especially a compressed signaling in terms of a mapping matrix or similar is employed.

According to the present invention, it is preferred and possible that the history information element additionally comprises a last visited cell information comprising pieces of visited cell information referring to a certain number of base station entities previously used by the user equipment.

It is thereby advantageously possible, according to the present invention, to utilize a corresponding path information in conjunction or combination with the last data usage information, in order to predict the probability or likelihood that a particular user equipment will, firstly, continue on a certain path and thereby activate and possibly also use a base station entity or series of base station entities, and, secondly, request a particular service or a series of particular services on its path visiting said base station entity or series of base station entities.

According to the present invention, it is preferred and possible that the last data usage information comprises a last activated slice information, wherein the last activated slice information comprises pieces of activated slice information regarding base station entities previously used by the user equipment, wherein each piece of activated slice information refers to one of the previously used base station entities, wherein especially each piece of activated slice information comprises
-- an indication indicating the network slice or network slices activated in view of the one previously used base station entity referred to by the piece of activated slice information, and/or
-- an indication indicating the network slice or network slices used in view of the one previously used base station entity referred to by the piece of activated slice information.

It is thereby advantageously possible, according to the present invention, to utilize the last activated slice information to relate the information contents of the history information element - such as the last data usage information and/or the last visited cell information - to the individual network slices and/or the sliced network architecture and/or the multiplexed independent logical networks of the mobile communication network, and, thereby, be able to infer or predict the future usage or utilization or probability or likelihood of usage or utilization of a particular network slice of the mobile communication network, especially in relation to a particular base station entity thereof. As a result, it is furthermore possible to enhance the RRM in the target base station entity (i.e. in the target cell) or to enhance the RRM in the mobile communication network as a whole (when utilizing the history information element received by the target base station entity) especially based on a trained artificial intelligence model or trained machine learning model which infers or predicts the future usage or utilization or probability or likelihood of usage or utilization of a particular network slice of the mobile communication network, especially in relation to a particular base station entity or a series of base station entities in case of internode mobility.

According to the present invention, it is preferred and possible that the last data usage information comprises a last buffer status per activated slice information, wherein the last buffer status per activated slice information comprises pieces of buffer status per activated slice information regarding base station entities previously used by the user equipment, wherein each piece of buffer status per activated slice information refers to one of the previously used base station entities,
wherein especially each piece of buffer status per activated slice information comprises an indication indicating the buffer status per used network slice in view of the one previously used base station entity referred to by the piece of buffer status per activated slice information,
wherein especially, the indication indicating the buffer status per used network slice relates to the buffer status report of the user equipment which is reported seconds before the handover execution.

It is thereby advantageously possible, according to the present invention, to utilize the buffer status per activated slice information as a simple means of indicating, with less technical effort and less communicational overhead, a particular information indicating the usage behaviour or usage pattern of the particular user equipment.

According to the present invention, it is preferred and possible that the indication indicating the buffer status per used network slice indicates or comprises at least one out of the following:
-- a usage of data volume per time instance just before execution of the handover,
-- a pointer information to a data volume range, especially very low, low, medium, large or very large data volume, especially relating, respectively, to a data volume of up to 1 MB, up to 10 MB, up to 100 MB, up to 500 MB and up to 1000 MB of data volume,
-- a pointer information to a data volume range in uplink direction, especially very low, low, medium, large or very large data volume in uplink direction, especially relating, respectively, to a data volume of up to 1 MB, up to 10 MB, up to 100 MB, up to 500 MB and up to 1000 MB of data volume in uplink direction,

-- a pointer information to a data volume range in downlink direction, especially very low, low, medium, large or very large data volume in downlink direction, especially relating, respectively, to a data volume of up to 1 MB, up to 10 MB, up to 100 MB, up to 500 MB and up to 1000 MB of data volume in downlink direction,
-- an information of secondary cell configuration and corresponding data usage status, either in form of a used data volume information or in form of a pointer information,
-- an information of both primary cell and secondary cell configuration and corresponding data usage status information, either in form of a used data volume information or in form of a pointer information.

It is thereby advantageously possible, according to the present invention, to utilize the buffer status per activated slice information to improve or complement or enhance the inference or prediction of a future usage or probability or likelihood of usage of resources of the mobile communication network, especially of the target base station entity, by means of model inference, especially by an artificial intelligence model or a machine learning model, by the usage of data volume per time instance just before execution of the handover and/or by a pointer information to a data volume range, especially very low, low, medium, large or very large data volume, especially relating, respectively, to a data volume of up to 1 MB, up to 10 MB, up to 100 MB, up to 500 MB and up to 1000 MB of data volume and/or by a pointer information to a data volume range in uplink direction, especially very low, low, medium, large or very large data volume in uplink direction, especially relating, respectively, to a data volume of up to 1 MB, up to 10 MB, up to 100 MB, up to 500 MB and up to 1000 MB of data volume in uplink direction and/or by a pointer information to a data volume range in downlink direction, especially very low, low, medium, large or very large data volume in downlink direction, especially relating, respectively, to a data volume of up to 1 MB, up to 10 MB, up to 100 MB, up to 500 MB and up to 1000 MB of data volume in downlink direction and/or by an information of secondary cell (SCell) configuration and corresponding data usage status, either in form of a used data volume information or in form of a pointer information and/or by an information of both primary cell (PCell) and secondary cell (SCell) configuration and corresponding data usage status information, either in form of a used data volume information or in form of a pointer information.

According to the present invention, it is preferred and possible that the last data usage information is used by an artificial intelligence/machine-learning entity or functionality to enhance the radio resource management in the target base station entity.

Furthermore, it is preferred and possible, according to the present invention, that a particular serving base station entity or functionality collects usage data from multiple user equipments and utilizes this data to train the artificial intelligence/machine-learning entity or functionality.

Still furthermore, it is preferred and possible, according to the present invention, that the target base station entity or functionality (i.e. the target cell) feeds back information to the source base station entity (i.e. the source cell) in order to apply a reinforcement learning method or scheme to build or to generate or to train the artificial intelligence model or the machine learning model. More specifically, it is possible and preferred, according to the present invention, that inferred or predicted information or quantities, preferably inferred or predicted usage patterns of resources or services or related information, are fed back to the source base station entity by the target base station entity.

It is thereby advantageously possible, according to the present invention, to build or to generate and especially to continuously improve the artificial intelligence/machine-learning entity or functionality by using the last data usage information in order to train the artificial intelligence/machine-learning entity or functionality with the aim of becoming more precise and/or more accurate at infering or predicting the future usage or probability or likelihood of usage of a particular resource or particular service of the target base station entity or the mobile communication network as a whole, and, therefore, enable or realize an improved, complemented or enhanced radio resource management in the target base station entity or in the mobile communication network as a whole. More specifically, it is advantageously possible, according to the present invention, that a particular (e.g. a currently serving) base station entity - after training of the artificial intelligence/machine learning model, especially with a training set that was compiled or collected from multiple user equipments - infers or predicts the network slice usage in a future target base station entity.

Furthermore, the present invention relates to a user equipment for being used with a mobile communication network for performing a handover operation of the user equipment in the mobile communication network, wherein the user equipment communicates with the mobile communication network using a radio access network of the mobile communication network that comprises a plurality of base station entities, wherein, prior to the handover operation, the user equipment uses, or is served by, a source base station entity, and, subsequent to the handover operation, the user equipment uses, or is served by, a target base station entity, wherein the user equipment is configured such that:
-- the source base station entity transmits a handover request message to the target base station entity, and
-- the target base station entity transmits a handover request acknowledge message, wherein a history information element relating to the user equipment
-- is either transmitted as part of the handover request message,
-- or is transmitted, to the target base station entity, by the user equipment,
wherein the history information element comprises a last data usage information comprising pieces of data usage information regarding base station entities previously used by the user equipment.

Furthermore, the present invention relates to a mobile communication network for performing a handover operation of a user equipment in a mobile communication network, wherein the mobile communication network comprises a radio access network comprising a plurality of base station entities, wherein, prior to the handover operation, the user equipment is served by a source base station entity, and, subsequent to the handover operation, the user equipment is served by a target base station entity, characterized in that, the mobile communication network is configured such that:
-- the source base station entity transmits a handover request message to the target base station entity, and
-- the target base station entity transmits a handover request acknowledge message, wherein a history information element relating to the user equipment
-- is either transmitted as part of the handover request message,
-- or is transmitted, to the target base station entity, by the user equipment,
wherein the history information element comprises a last data usage information comprising pieces of data usage information regarding base station entities previously used by the user equipment.

Additionally, the present invention relates to a program comprising a computer readable program code, which, when executed on a computer and/or on a user equipment and/or on a network node of a mobile communication network, especially a base station entity, or in part on a user equipment and/or in part on the network node of the mobile communication network, especially a base station entity, causes the computer and/or the user equipment and/or the network node of the mobile communication network, especially the base station entity, to perform the inventive method.

Still additionally, the present invention relates to a computer-readable medium comprising instructions which when executed on a computer and/or on a user equipment and/or on a network node of a mobile communication network, especially a base station entity, or in part on a user equipment and/or in part on the network node of the mobile communication network, especially a base station entity, causes the computer and/or the user equipment and/or the network node of the mobile communication network, especially the base station entity, to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention defined by the appended claims. The reference figures quoted below refer to the attached drawings.

### BRIEF DESCRIPTION OF THE DRAWINGS

Figure 1 schematically illustrates the situation of a user equipment in a mobile communication network, the user equipment crossing the intersection of the source radio cell of the source base station entity and the target radio cell of the target base station entity.
Figure 2 schematically illustrates the composition of a history information element that is transmitted as part of a handover request message.
Figure 3 schematically illustrates a previous path of a user equipment before reaching, firstly, the source radio cell of the source base station entity, and, secondly, the target radio cell of the target base station entity.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

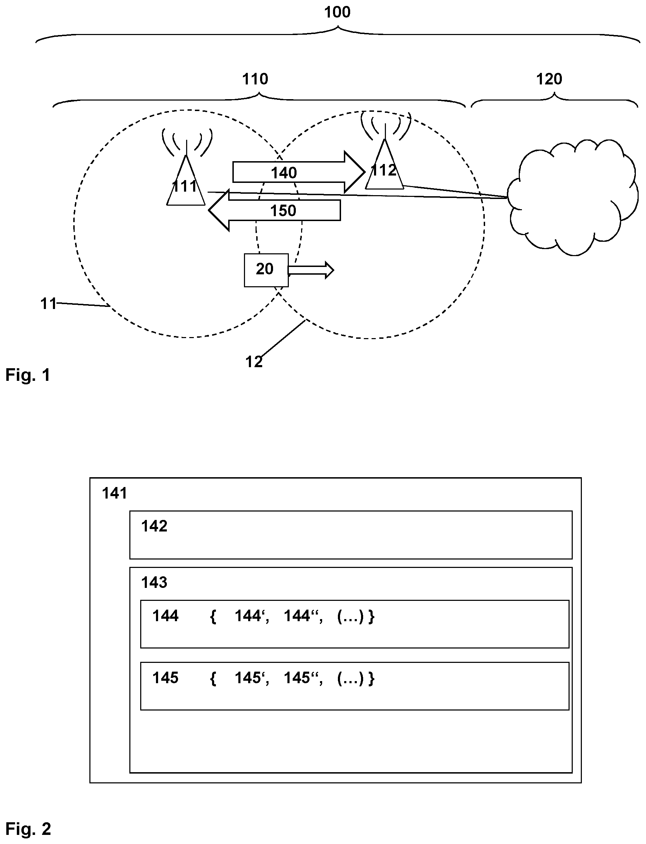

In Figure 1, a telecommunications network 100 comprising a radio access network 110, and a core network 120 is schematically shown. The telecommunications network 100 or also mobile communication network 100 is typically realized as a cellular network or cellular mobile communication network 100. The mobile communication network 100, especially the core network 120, typically comprises a number of network functions or services that are not specifically indicated by means of a reference sign. The access network 110 or radio access network 110 comprises a plurality of radio cells 11, 12, i.e. geographical areas served, respectively, by base station entities. In the exemplary situation or scenario shown in Figure 1, a source base station entity 111 generates or is associated with or spans the source (terrestrial) radio cell 11, and a target base station entity 112 generates or is associated with or spans the target (terrestrial) radio cell 12 (the source and target (terrestrial) radio cells 11, 12 being represented, in Figure 1, by means of dashed circles around the source and target base station entities 111, 112, respectively). The source and target base station entities 111, 112 typically realize gNB functionality or next-generation gNB functionality. The mobile communication network 100 is typically connected to a user equipment 20 (or, rather, the user equipment 20 is connected to the telecommunications network 100). In the schematically depicted situation, the user equipment 20 is crossing the intersection of the source coverage area of the source base station entity 111 and the target coverage area of the target base station entity 112. A handover request message 140 is sent by the source base station entity 111 to the target base station entity 112 and the target base station entity transmits a handover request acknowledge message 150.

In Figure 2, the composition of a history information element 141 that is transmitted as part of the handover request message 140 is shown. The history information element is composed of or comprises last visited cell information 142, thereby, especially, the previous path of the user equipment 20 may be inferred, the history information element also comprises a last data usage information 143, thereby, especially, past usage patterns of resources and services of visited radio cells may be used to infer future usage patterns. The last data usage information is composed of last activated slice information 144 which in turn comprises pieces of activated slice information 144' and 144" and last buffer status per activated slice information 145 which in turn comprises pieces of buffer status per activated slice information 145' and 145". Wherein each piece of activated slice information 144', 144" comprises an indication indicating the network slice or network slices activated in view of the one previously used base station entity referred to by the piece of activated slice information 144', 144", and/or an indication indicating the network slice or network slices used in view of the one previously used base station entity referred to by the piece of activated slice information 144' and 144" and wherein each piece of buffer status per activated slice information 145' and 145" comprises an indication indicating the buffer status per used network slice in view of the one previously used base station entity referred to by the piece of buffer status per activated slice information 145' and 145", wherein the indication indicating the buffer status per used network slice relates to the buffer status report of the user equipment 20 which is reported seconds before the handover execution. By means of sharing the last activated slice information 144 and the buffer status per activated slice information 145 the usage pattern of different network slices, especially of virtualized and multiplexed logical networks, of the mobile communication network 100 and the related usage of resources and services can be inferred and predicted by the target base station entity 112, wherein the buffer status per activated slice information 145 allows for a signaling of a relevant indicator of data volume per time instance or data volume range, either in uplink or downlink or both with a minimum of technical effort and minimal communication overhead.

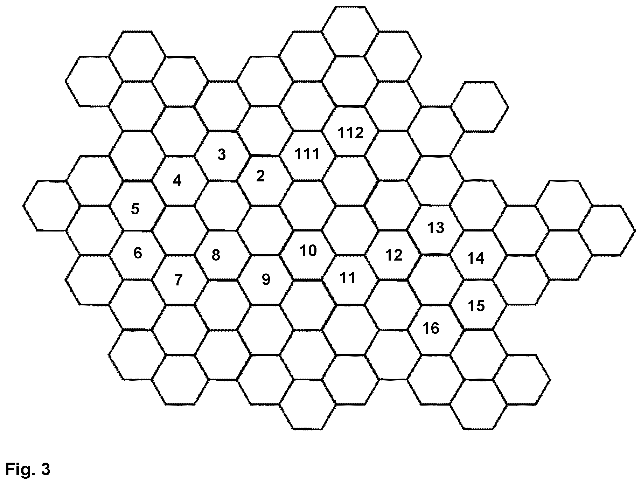

In Figure 3, a previous path of a user equipment before reaching, firstly, the source radio cell 11 of the source base station entity 111, and, secondly, the target radio cell 12 of the target base station entity 112 is shown. A series of radio cells designated by reference signs 2 to 16 have been visited, wherein smaller numbers refer to more recently visited radio cells. The information about the series of visited radio cells 2 to 16 may be contained and/or encoded within the history information element 141, more specifically within the pieces of last activated slice information 144' and 144".

## Claims

1. Method for performing a handover operation of a user equipment (20) in a mobile communication network (100), wherein the mobile communication network (100) comprises a radio access network (110) comprising a plurality of base station entities, wherein, prior to the handover operation, the user equipment (20) is served by a source base station entity (111), and, subsequent to the handover operation, the user equipment (20) is served by a target base station entity (112), **characterized in that**, the method comprises the following steps:
-- in a first step, the source base station entity (111) transmits a handover request message (140) to the target base station entity (112), and
-- in a second step, the target base station entity (112) transmits a handover request acknowledge message (150),
wherein a history information element (141) relating to the user equipment (20)
-- is either transmitted as part of the handover request message (140),
-- or is transmitted, to the target base station entity (112), by the user equipment (20),
wherein the history information element (141) comprises a last data usage information (143) comprising pieces of data usage information regarding base station entities previously used by the user equipment (20), wherein the last data usage information (143) comprises a last activated slice information (144) and a last buffer status per activated slice information (145).

2. Method according to claim 1, wherein the history information element (141) additionally comprises a last visited cell information (142) comprising pieces of visited cell information referring to a certain number of base station entities previously used by the user equipment (20).

3. Method according to one of the preceding claims, wherein the last data usage information (143) comprises a last activated slice information (144), wherein the last activated slice information (144) comprises pieces of activated slice information (144', 144") regarding base station entities previously used by the user equipment (20), wherein each piece of activated slice information (144', 144") refers to one of the previously used base station entities,
wherein especially each piece of activated slice information (144', 144") comprises
-- an indication indicating the network slice or network slices activated in view of the one previously used base station entity referred to by the piece of activated slice information (144', 144"), and/or
-- an indication indicating the network slice or network slices used in view of the one previously used base station entity referred to by the piece of activated slice information (144', 144").

4. Method according to one of the preceding claims, wherein the last data usage information (143) comprises a last buffer status per activated slice information (145), wherein the last buffer status per activated slice information (145) comprises pieces of buffer status per activated slice information (145', 145") regarding base station entities previously used by the user equipment (20), wherein each piece of buffer status per activated slice information (145', 145") refers to one of the previously used base station entities,
wherein especially each piece of buffer status per activated slice information (145', 145") comprises an indication indicating the buffer status per used network slice in view of the one previously used base station entity referred to by the piece of buffer status per activated slice information (145', 145"),
wherein especially, the indication indicating the buffer status per used network slice relates to the buffer status report of the user equipment (20) which is reported seconds before the handover execution.

5. Method according to one of the preceding claims, wherein the indication indicating the buffer status per used network slice indicates or comprises at least one out of the following:
-- a usage of data volume per time instance just before execution of the handover,
-- a pointer information to a data volume range, especially very low, low, medium, large or very large data volume, especially relating, respectively, to a data volume of up to 1 MB, up to 10 MB, up to 100 MB, up to 500 MB and up to 1000 MB of data volume,
-- a pointer information to a data volume range in uplink direction, especially very low, low, medium, large or very large data volume in uplink direction, especially relating, respectively, to a data volume of up to 1 MB, up to 10 MB, up to 100 MB, up to 500 MB and up to 1000 MB of data volume in uplink direction,
-- a pointer information to a data volume range in downlink direction, especially very low, low, medium, large or very large data volume in downlink direction, especially relating, respectively, to a data volume of up to 1 MB, up to 10 MB, up to 100 MB, up to 500 MB and up to 1000 MB of data volume in downlink direction,
-- an information of secondary cell configuration and corresponding data usage status, either in form of a used data volume information or in form of a pointer information,
-- an information of both primary cell and secondary cell configuration and corresponding data usage status information, either in form of a used data volume information or in form of a pointer information.

6. Method according to one of the preceding claims, wherein the last data usage information (143) is used by an artificial intelligence/machine-learning entity or functionality to enhance the radio resource management in the target base station entity (112).

7. User equipment (20) for being used with a mobile communication network (100) for performing a handover operation of the user equipment (20) in the mobile communication network (100), wherein the user equipment (20) communicates with the mobile communication network (100) using a radio access network (110) of the mobile communication network (100) that comprises a plurality of base station entities, wherein, prior to the handover operation, the user equipment (20) uses, or is served by, a source base station entity (111), and, subsequent to the handover operation, the user equipment (20) uses, or is served by, a target base station entity (112), **characterized in that**, the user equipment (20) is configured such that:
-- the source base station entity (111) transmits a handover request message (140) to the target base station entity (112), and
-- the target base station entity (112) transmits a handover request acknowledge message (150),
wherein a history information element (141) relating to the user equipment (20)
-- is either transmitted as part of the handover request message (140),
-- or is transmitted, to the target base station entity (112), by the user equipment (20),
wherein the history information element (141) comprises a last data usage information (143) comprising pieces of data usage information regarding base station entities previously used by the user equipment (20), wherein the last data usage information (143) comprises a last activated slice information (144) and a last buffer status per activated slice information (145).

8. Mobile communication network (100) for performing a handover operation of a user equipment (20) in a mobile communication network (100), wherein the mobile communication network (100) comprises a radio access network (110) comprising a plurality of base station entities, wherein, prior to the handover operation, the user equipment (20) is served by a source base station entity (111), and, subsequent to the handover operation, the user equipment (20) is served by a target base station entity (112), **characterized in that**, the mobile communication network (100) is configured such that:
-- the source base station entity (111) transmits a handover request message (140) to the target base station entity (112), and
-- the target base station entity (112) transmits a handover request acknowledge message (150),
wherein a history information element (141) relating to the user equipment (20)
-- is either transmitted as part of the handover request message (140),
-- or is transmitted, to the target base station entity (112), by the user equipment (20),
wherein the history information element (141) comprises a last data usage information (143) comprising pieces of data usage information regarding base station entities previously used by the user equipment (20), wherein the last data usage information (143) comprises a last activated slice information (144) and a last buffer status per activated slice information (145).

9. Program comprising a computer readable program code, which, when executed on a computer and/or on a user equipment (20) and/or on a network node of a mobile communication network (100), especially a base station entity (111, 112), or in part on a user equipment (20) and/or in part on the network node of the mobile communication network (100), especially a base station entity (111, 112), causes the computer and/or the user equipment (20) and/or the network node of the mobile communication network (100), especially the base station entity (111, 112), to perform a method according one of claims 1 to 6.

10. Computer-readable medium comprising instructions which when executed on a computer and/or on a user equipment (20) and/or on a network node of a mobile communication network (100), especially a base station entity (111, 112), or in part on a user equipment (20) and/or in part on the network node of the mobile communication network (100), especially a base station entity (111, 112), causes the computer and/or the user equipment (20) and/or the network node of the mobile communication network (100), especially the base station entity (111, 112), to perform a method according one of claims 1 to 6.

## Patentansprüche

1. Verfahren zur Durchführung eines Handover-Vorgangs eines Benutzergeräts (20) in einem Mobilkommunikationsnetz (100), wobei das Mobilkommunikationsnetz (100) ein Funkzugangsnetz (110) umfasst, das eine Mehrzahl von Basisstationseinheiten umfasst, wobei das Benutzergerät (20) vor dem Handover-Vorgang von einer Quell-Basisstationseinheit (111) bedient wird und das Benutzergerät (20) nach dem Handover-Vorgang von einer Ziel-Basisstationseinheit (112) bedient wird, **dadurch gekennzeichnet, dass** das Verfahren die folgenden Schritte umfasst:
-- in einem ersten Schritt überträgt die Quell-Basisstationseinheit (111) eine Handover-Anforderungsnachricht (140) an die Ziel-Basisstationseinheit (112), und
-- in einem zweiten Schritt überträgt die Ziel-Basisstationseinheit (112) eine Handover-Anforderungsbestätigungsnachricht (150),
wobei ein Verlaufsinformationselement (141) betreffend das Benutzergerät (20)
-- entweder als Teil der Handover-Anforderungsnachricht (140) übertragen wird,
-- oder von dem Benutzergerät (20) an die Ziel-Basisstationseinheit (112) übertragen wird,
wobei das Verlaufsinformationselement (141) eine letzte Datennutzungsinformation (143) umfasst, die Teile von Datennutzungsinformationen bezüglich zuvor von dem Benutzergerät (20) genutzter Basisstationseinheiten umfasst, wobei die letzte Datennutzungsinformation (143) eine letzte aktivierte Slice-Information (144) und eine letzte Pufferstatus-pro-aktivierter-Slice-Information (145) umfasst.

2. Verfahren nach Anspruch 1, wobei das Verlaufsinformationselement (141) zusätzlich eine letzte besuchte Zellinformation (142) umfasst, die Teile von besuchter Zellinformation umfasst, die sich auf eine bestimmte Anzahl von zuvor von dem Benutzergerät (20) genutzten Basisstationseinheiten beziehen.

3. Verfahren nach einem der vorhergehenden Ansprüche, wobei die letzte Datennutzungsinformation (143) eine letzte aktivierte Slice-Information (144) umfasst, wobei die letzte aktivierte Slice-Information (144) Teile von aktivierter Slice-Information (144', 144") bezüglich zuvor von dem Benutzergerät (20) genutzter Basisstationseinheiten umfasst, wobei jeder Teil der aktivierten Slice-Information (144', 144") sich auf eine der zuvor genutzten Basisstationseinheiten bezieht,
wobei insbesondere jeder Teil der aktivierten Slice-Information (144', 144") umfasst
-- eine Angabe, die den Netzwerk-Slice oder die Netzwerk-Slices anzeigt, die im Hinblick auf diejenige zuvor genutzte Basisstationseinheit aktiviert sind, auf die sich der Teil der aktivierten Slice-Information (144', 144") bezieht, und/oder
-- eine Angabe, die den Netzwerk-Slice oder die Netzwerk-Slices anzeigt, die im Hinblick auf diejenige zuvor genutzte Basisstationseinheit verwendet werden, auf die sich der Teil der aktivierten Slice-Information (144', 144") bezieht.

4. Verfahren nach einem der vorhergehenden Ansprüche, wobei die letzte Datennutzungsinformation (143) eine letzte Pufferstatus-pro-aktivierter-Slice-Information (145) umfasst, wobei die letzte Pufferstatus-pro-aktivierter-Slice-Information (145) Teile von Pufferstatus-pro-aktivierter-Slice-Information (145', 145") bezüglich zuvor von dem Benutzergerät (20) genutzter Basisstationseinheiten umfasst, wobei jeder Teil der Pufferstatus-pro-aktivierter-Slice-Information (145', 145") sich auf eine der zuvor genutzten Basisstationseinheiten bezieht,
wobei insbesondere jeder Teil der Pufferstatus-pro-aktivierter-Slice-Information (145', 145") eine Angabe umfasst, die den Pufferstatus pro genutztem Netzwerk-Slice im Hinblick auf diejenige zuvor genutzte Basisstationseinheit anzeigt, auf die sich der Teil der Pufferstatus-pro-aktivierter-Slice-Information (145', 145") bezieht,
wobei insbesondere die Angabe, die den Pufferstatus pro genutztem Netzwerk-Slice anzeigt, sich auf den Pufferstatusbericht des Benutzergeräts (20) bezieht, der Sekunden vor der Durchführung des Handovers gemeldet wird.

5. Verfahren nach einem der vorhergehenden Ansprüche, wobei die Angabe, die den Pufferstatus pro genutztem Netzwerk-Slice anzeigt, mindestens eines der Folgenden anzeigt oder umfasst:
-- eine Nutzung des Datenvolumens pro Zeitpunkt unmittelbar vor der Durchführung des Handovers,
-- eine Zeigerinformation zu einem Datenvolumenbereich, insbesondere sehr niedriges, niedriges, mittleres, großes oder sehr großes Datenvolumen, insbesondere bezogen jeweils auf ein Datenvolumen von bis zu 1 MB, bis zu 10 MB, bis zu 100 MB, bis zu 500 MB und bis zu 1000 MB Datenvolumen,
-- eine Zeigerinformation zu einem Datenvolumenbereich in Uplink-Richtung, insbesondere sehr niedriges, niedriges, mittleres, großes oder sehr großes Datenvolumen in Uplink-Richtung, insbesondere bezogen jeweils auf ein Datenvolumen von bis zu 1 MB, bis zu 10 MB, bis zu 100 MB, bis zu 500 MB und bis zu 1000 MB Datenvolumen in Uplink-Richtung,
-- eine Zeigerinformation zu einem Datenvolumenbereich in Downlink-Richtung, insbesondere sehr niedriges, niedriges, mittleres, großes oder sehr großes Datenvolumen in Downlink-Richtung, insbesondere bezogen jeweils auf ein Datenvolumen von bis zu 1 MB, bis zu 10 MB, bis zu 100 MB, bis zu 500 MB und bis zu 1000 MB Datenvolumen in Downlink-Richtung,
-- eine Information über die Sekundärzellenkonfiguration und den entsprechenden Datennutzungsstatus, entweder in Form einer Information über genutztes Datenvolumen oder in Form einer Zeigerinformation,
-- eine Information sowohl über die Primärzellenkonfiguration als auch über die Sekundärzellenkonfiguration und die entsprechende Datennutzungsstatusinformation, entweder in Form einer Information über genutztes Datenvolumen oder in Form einer Zeigerinformation.

6. Verfahren nach einem der vorhergehenden Ansprüche, wobei die letzte Datennutzungsinformation (143) von einer Künstliche-Intelligenz-/Maschinenlern-Einheit oder - Funktionalität verwendet wird, um die Funkressourcenverwaltung in der Ziel-Basisstationseinheit (112) zu verbessern.

7. Benutzergerät (20) zur Verwendung mit einem Mobilkommunikationsnetz (100) zur Durchführung eines Handover-Vorgangs des Benutzergeräts (20) in dem Mobilkommunikationsnetz (100), wobei das Benutzergerät (20) mit dem Mobilkommunikationsnetz (100) unter Verwendung eines eine Mehrzahl von Basisstationseinheiten umfassenden Funkzugangsnetzes (110) des Mobilkommunikationsnetzes (100) kommuniziert, wobei das Benutzergerät (20) vor dem Handover-Vorgang eine Quell-Basisstationseinheit (111) nutzt oder von dieser bedient wird, und das Benutzergerät (20) nach dem Handover-Vorgang eine Ziel-Basisstationseinheit (112) nutzt oder von dieser bedient wird, **dadurch gekennzeichnet, dass** das Benutzergerät (20) derart konfiguriert ist, dass:
-- die Quell-Basisstationseinheit (111) eine Handover-Anforderungsnachricht (140) an die Ziel-Basisstationseinheit (112) überträgt, und
-- die Ziel-Basisstationseinheit (112) eine Handover-Anforderungsbestätigungsnachricht (150) überträgt,
wobei ein Verlaufsinformationselement (141) betreffend das Benutzergerät (20)
-- entweder als Teil der Handover-Anforderungsnachricht (140) übertragen wird,
-- oder von dem Benutzergerät (20) an die Ziel-Basisstationseinheit (112) übertragen wird,
wobei das Verlaufsinformationselement (141) eine letzte Datennutzungsinformation (143) umfasst, die Teile von Datennutzungsinformationen bezüglich zuvor von dem Benutzergerät (20) genutzter Basisstationseinheiten umfasst, wobei die letzte Datennutzungsinformation (143) eine letzte aktivierte Slice-Information (144) und eine letzte Pufferstatus-pro-aktivierter-Slice-Information (145) umfasst.

8. Mobilkommunikationsnetz (100) zur Durchführung eines Handover-Vorgangs eines Benutzergeräts (20) in einem Mobilkommunikationsnetz (100), wobei das Mobilkommunikationsnetz (100) ein Funkzugangsnetz (110) umfasst, das eine Mehrzahl von Basisstationseinheiten umfasst, wobei das Benutzergerät (20) vor dem Handover-Vorgang von einer Quell-Basisstationseinheit (111) bedient wird und das Benutzergerät (20) nach dem Handover-Vorgang von einer Ziel-Basisstationseinheit (112) bedient wird, **dadurch gekennzeichnet, dass** das Mobilkommunikationsnetz (100) derart konfiguriert ist, dass:
-- die Quell-Basisstationseinheit (111) eine Handover-Anforderungsnachricht (140) an die Ziel-Basisstationseinheit (112) überträgt, und
-- die Ziel-Basisstationseinheit (112) eine Handover-Anforderungsbestätigungsnachricht (150) überträgt,
wobei ein Verlaufsinformationselement (141) betreffend das Benutzergerät (20)
-- entweder als Teil der Handover-Anforderungsnachricht (140) übertragen wird,
-- oder von dem Benutzergerät (20) an die Ziel-Basisstationseinheit (112) übertragen wird,
wobei das Verlaufsinformationselement (141) eine letzte Datennutzungsinformation (143) umfasst, die Teile von Datennutzungsinformationen bezüglich zuvor von dem Benutzergerät (20) genutzter Basisstationseinheiten umfasst, wobei die letzte Datennutzungsinformation (143) eine letzte aktivierte Slice-Information (144) und eine letzte Pufferstatus-pro-aktivierter-Slice-Information (145) umfasst.

9. Programm, umfassend einen computerlesbaren Programmcode, der, wenn er auf einem Computer und/oder auf einem Benutzergerät (20) und/oder auf einem Netzwerkknoten eines Mobilkommunikationsnetzes (100), insbesondere einer Basisstationseinheit (111, 112), oder teilweise auf einem Benutzergerät (20) und/oder teilweise auf dem Netzwerkknoten des Mobilkommunikationsnetzes (100), insbesondere einer Basisstationseinheit (111, 112), ausgeführt wird, den Computer und/oder das Benutzergerät (20) und/oder den Netzwerkknoten des Mobilkommunikationsnetzes (100), insbesondere die Basisstationseinheit (111, 112), veranlasst, ein Verfahren nach einem der Ansprüche 1 bis 6 durchzuführen.

10. Computerlesbares Medium, umfassend Anweisungen, die, wenn sie auf einem Computer und/oder auf einem Benutzergerät (20) und/oder auf einem Netzwerkknoten eines Mobilkommunikationsnetzes (100), insbesondere einer Basisstationseinheit (111, 112), oder teilweise auf einem Benutzergerät (20) und/oder teilweise auf dem Netzwerkknoten des Mobilkommunikationsnetzes (100), insbesondere einer Basisstationseinheit (111, 112), ausgeführt werden, den Computer und/oder das Benutzergerät (20) und/oder den Netzwerkknoten des Mobilkommunikationsnetzes (100), insbesondere die Basisstationseinheit (111, 112), veranlassen, ein Verfahren nach einem der Ansprüche 1 bis 6 durchzuführen.

## Revendications

1. Procédé pour réaliser une opération de transfert intercellulaire d'un équipement utilisateur (20) dans un réseau de communication mobile (100), dans lequel le réseau de communication mobile (100) comprend un réseau d'accès radio (110) comprenant une pluralité d'entités de station de base, dans lequel, avant l'opération de transfert intercellulaire, l'équipement utilisateur (20) est desservi par une entité de station de base source (111) et, après l'opération de transfert intercellulaire, l'équipement utilisateur (20) est desservi par une entité de station de base cible (112), **caractérisé en ce que** le procédé comprend les étapes suivantes :
-- dans une première étape, l'entité de station de base source (111) transmet un message de demande de transfert intercellulaire (140) à l'entité de station de base cible (112), et
-- dans une seconde étape, l'entité de station de base cible (112) transmet un message d'accusé de réception de demande de transfert intercellulaire (150),
dans lequel un élément d'information d'historique (141) relatif à l'équipement utilisateur (20)
-- est soit transmis en tant que partie du message de demande de transfert intercellulaire (140),
-- soit transmis, à l'entité de station de base cible (112), par l'équipement utilisateur (20),
dans lequel l'élément d'information d'historique (141) comprend une dernière information d'utilisation de données (143) comprenant des parties d'information d'utilisation de données concernant des entités de station de base précédemment utilisées par l'équipement utilisateur (20), dans lequel la dernière information d'utilisation de données (143) comprend une dernière information de tranche activée (144) et une dernière information d'état de mémoire tampon par tranche activée (145).

2. Procédé selon la revendication 1, dans lequel l'élément d'information d'historique (141) comprend en outre une dernière information de cellule visitée (142) comprenant des parties d'information de cellule visitée se rapportant à un certain nombre d'entités de station de base précédemment utilisées par l'équipement utilisateur (20).

3. Procédé selon l'une des revendications précédentes, dans lequel la dernière information d'utilisation de données (143) comprend une dernière information de tranche activée (144), dans lequel la dernière information de tranche activée (144) comprend des parties d'information de tranche activée (144', 144") concernant des entités de station de base précédemment utilisées par l'équipement utilisateur (20), dans lequel chaque partie d'information de tranche activée (144', 144") se rapporte à l'une des entités de station de base précédemment utilisées,
dans lequel, notamment, chaque partie d'information de tranche activée (144', 144") comprend
-- une indication indiquant la tranche de réseau ou les tranches de réseau activées eu égard à l'une des entités de station de base précédemment utilisées à laquelle se rapporte la partie d'information de tranche activée (144', 144"), et/ou
-- une indication indiquant la tranche de réseau ou les tranches de réseau utilisées eu égard à l'une des entités de station de base précédemment utilisées à laquelle se rapporte la partie d'information de tranche activée (144', 144").

4. Procédé selon l'une des revendications précédentes, dans lequel la dernière information d'utilisation de données (143) comprend une dernière information d'état de mémoire tampon par tranche activée (145), dans lequel la dernière information d'état de mémoire tampon par tranche activée (145) comprend des parties d'information d'état de mémoire tampon par tranche activée (145', 145") concernant des entités de station de base précédemment utilisées par l'équipement utilisateur (20), dans lequel chaque partie d'information d'état de mémoire tampon par tranche activée (145', 145") se rapporte à l'une des entités de station de base précédemment utilisées, dans lequel, notamment, chaque partie d'information d'état de mémoire tampon par tranche activée (145', 145") comprend une indication indiquant l'état de mémoire tampon par tranche de réseau utilisée eu égard à l'une des entités de station de base précédemment utilisées à laquelle se rapporte la partie d'information d'état de mémoire tampon par tranche activée (145', 145"),
dans lequel, notamment, l'indication indiquant l'état de mémoire tampon par tranche de réseau utilisée se rapporte au rapport d'état de mémoire tampon de l'équipement utilisateur (20), lequel est rapporté des secondes avant l'exécution du transfert intercellulaire.

5. Procédé selon l'une des revendications précédentes, dans lequel l'indication indiquant l'état de mémoire tampon par tranche de réseau utilisée indique ou comprend au moins l'un des éléments suivants :
-- une utilisation du volume de données par instant, juste avant l'exécution du transfert intercellulaire,
-- une information de pointeur vers une plage de volume de données, notamment un volume de données très faible, faible, moyen, grand ou très grand, se rapportant notamment, respectivement, à un volume de données allant jusqu'à 1 Mo, jusqu'à 10 Mo, jusqu'à 100 Mo, jusqu'à 500 Mo et jusqu'à 1000 Mo de volume de données,
-- une information de pointeur vers une plage de volume de données en direction de liaison montante, notamment un volume de données très faible, faible, moyen, grand ou très grand en direction de liaison montante, se rapportant notamment, respectivement, à un volume de données allant jusqu'à 1 Mo, jusqu'à 10 Mo, jusqu'à 100 Mo, jusqu'à 500 Mo et jusqu'à 1000 Mo de volume de données en direction de liaison montante,
-- une information de pointeur vers une plage de volume de données en direction de liaison descendante, notamment un volume de données très faible, faible, moyen, grand ou très grand en direction de liaison descendante, se rapportant notamment, respectivement, à un volume de données allant jusqu'à 1 Mo, jusqu'à 10 Mo, jusqu'à 100 Mo, jusqu'à 500 Mo et jusqu'à 1000 Mo de volume de données en direction de liaison descendante,
-- une information de configuration de cellule secondaire et d'état d'utilisation de données correspondant, soit sous forme d'une information de volume de données utilisé, soit sous forme d'une information de pointeur,
-- une information portant à la fois sur la configuration de cellule primaire et sur la configuration de cellule secondaire, ainsi que sur l'information d'état d'utilisation de données correspondante, soit sous forme d'une information de volume de données utilisé, soit sous forme d'une information de pointeur.

6. Procédé selon l'une des revendications précédentes, dans lequel la dernière information d'utilisation de données (143) est utilisée par une entité ou une fonctionnalité d'intelligence artificielle/apprentissage automatique pour améliorer la gestion des ressources radio dans l'entité de station de base cible (112).

7. Équipement utilisateur (20) destiné à être utilisé avec un réseau de communication mobile (100) pour réaliser une opération de transfert intercellulaire de l'équipement utilisateur (20) dans le réseau de communication mobile (100), dans lequel l'équipement utilisateur (20) communique avec le réseau de communication mobile (100) au moyen d'un réseau d'accès radio (110) du réseau de communication mobile (100) comprenant une pluralité d'entités de station de base, dans lequel, avant l'opération de transfert intercellulaire, l'équipement utilisateur (20) utilise, ou est desservi par, une entité de station de base source (111), et, après l'opération de transfert intercellulaire, l'équipement utilisateur (20) utilise, ou est desservi par, une entité de station de base cible (112), **caractérisé en ce que** l'équipement utilisateur (20) est configuré de telle sorte que :
-- l'entité de station de base source (111) transmet un message de demande de transfert intercellulaire (140) à l'entité de station de base cible (112), et
-- l'entité de station de base cible (112) transmet un message d'accusé de réception de demande de transfert intercellulaire (150),
dans lequel un élément d'information d'historique (141) relatif à l'équipement utilisateur (20)
-- est soit transmis en tant que partie du message de demande de transfert intercellulaire (140),
-- soit transmis, à l'entité de station de base cible (112), par l'équipement utilisateur (20),
dans lequel l'élément d'information d'historique (141) comprend une dernière information d'utilisation de données (143) comprenant des parties d'information d'utilisation de données concernant des entités de station de base précédemment utilisées par l'équipement utilisateur (20), dans lequel la dernière information d'utilisation de données (143) comprend une dernière information de tranche activée (144) et une dernière information d'état de mémoire tampon par tranche activée (145).

8. Réseau de communication mobile (100) pour réaliser une opération de transfert intercellulaire d'un équipement utilisateur (20) dans un réseau de communication mobile (100), dans lequel le réseau de communication mobile (100) comprend un réseau d'accès radio (110) comprenant une pluralité d'entités de station de base, dans lequel, avant l'opération de transfert intercellulaire, l'équipement utilisateur (20) est desservi par une entité de station de base source (111) et, après l'opération de transfert intercellulaire, l'équipement utilisateur (20) est desservi par une entité de station de base cible (112), **caractérisé en ce que** le réseau de communication mobile (100) est configuré de telle sorte que :
-- l'entité de station de base source (111) transmet un message de demande de transfert intercellulaire (140) à l'entité de station de base cible (112), et
-- l'entité de station de base cible (112) transmet un message d'accusé de réception de demande de transfert intercellulaire (150),
dans lequel un élément d'information d'historique (141) relatif à l'équipement utilisateur (20)
-- est soit transmis en tant que partie du message de demande de transfert intercellulaire (140),
-- soit transmis, à l'entité de station de base cible (112), par l'équipement utilisateur (20),
dans lequel l'élément d'information d'historique (141) comprend une dernière information d'utilisation de données (143) comprenant des parties d'information d'utilisation de données concernant des entités de station de base précédemment utilisées par l'équipement utilisateur (20), dans lequel la dernière information d'utilisation de données (143) comprend une dernière information de tranche activée (144) et une dernière information d'état de mémoire tampon par tranche activée (145).

9. Programme comprenant un code de programme lisible par ordinateur, lequel, lorsqu'il est exécuté sur un ordinateur et/ou sur un équipement utilisateur (20) et/ou sur un nœud de réseau d'un réseau de communication mobile (100), notamment une entité de station de base (111, 112), ou en partie sur un équipement utilisateur (20) et/ou en partie sur le nœud de réseau du réseau de communication mobile (100), notamment une entité de station de base (111, 112), amène l'ordinateur et/ou l'équipement utilisateur (20) et/ou le nœud de réseau du réseau de communication mobile (100), notamment l'entité de station de base (111, 112), à réaliser un procédé selon l'une des revendications 1 à 6.

10. Support lisible par ordinateur comprenant des instructions qui, lorsqu'elles sont exécutées sur un ordinateur et/ou sur un équipement utilisateur (20) et/ou sur un nœud de réseau d'un réseau de communication mobile (100), notamment une entité de station de base (111, 112), ou en partie sur un équipement utilisateur (20) et/ou en partie sur le nœud de réseau du réseau de communication mobile (100), notamment une entité de station de base (111, 112), amènent l'ordinateur et/ou l'équipement utilisateur (20) et/ou le nœud de réseau du réseau de communication mobile (100), notamment l'entité de station de base (111, 112), à réaliser un procédé selon l'une des revendications 1 à 6.
